(19) Europäisches Patentamt
European Patent Office
Office européen des brevets

(11) EP 1 276 794 B1

(12) # EUROPÄISCHE PATENTSCHRIFT

(45) Veröffentlichungstag und Bekanntmachung des Hinweises auf die Patenterteilung:
**14.09.2005 Patentblatt 2005/37**

(21) Anmeldenummer: **01909826.8**

(22) Anmeldetag: **06.03.2001**

(51) Int Cl.[7]: **C08J 5/18**, B29D 7/01, B32B 27/18

(86) Internationale Anmeldenummer:
**PCT/EP2001/002617**

(87) Internationale Veröffentlichungsnummer:
**WO 2001/068756 (20.09.2001 Gazette 2001/38)**

(54) **EINGEFÄRBTE, SCHWER ENTFLAMMBARE, UV-STABILE, THERMOFORMBARE FOLIE AUS EINEM KRISTALLISIERBAREN THERMOPLASTEN, VERFAHREN ZU IHRER HERSTELLUNG UND IHRE VERWENDUNG**

DYED, LOW-FLAMMABILITY, UV-STABLE, THERMOFORMABLE FILM CONSISTING OF A CRYSTALLIZABLE THERMOPLASTIC, METHOD FOR PRODUCING SAID FILM AND USE THEREOF

FEUILLE THERMOFORMABLE, COLOREE, STABLE AUX U.V., DIFFICILEMENT INFLAMMABLE, REALISEE A PARTIR D'UN THERMOPLASTIQUE CRISTALLISABLE, SON PROCEDE DE REALISATION ET SON UTILISATION

(84) Benannte Vertragsstaaten:
**DE FR GB IT LU**

(30) Priorität: **13.03.2000 DE 10012140**

(43) Veröffentlichungstag der Anmeldung:
**22.01.2003 Patentblatt 2003/04**

(73) Patentinhaber: **Mitsubishi Polyester Film GmbH
65203 Wiesbaden (DE)**

(72) Erfinder:
- **MURSCHALL, Ursula
55283 Nierstein (DE)**
- **KERN, Ulrich
55218 Ingelheim (DE)**
- **CRASS, Günther
65232 Taunusstein (DE)**

(74) Vertreter: **Schweitzer, Klaus et al
Patentanwaltskanzlei Zounek,
Industriepark Kalle-Albert,
Gebäude H391
Rheingaustrasse 190-196
65174 Wiesbaden (DE)**

(56) Entgegenhaltungen:
**DE-A- 2 300 114** **GB-A- 2 344 596**

- **PATENT ABSTRACTS OF JAPAN vol. 1995, no. 07, 31. August 1995 (1995-08-31) & JP 07 101011 A (TORAY IND INC), 18. April 1995 (1995-04-18)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 276 794 B1

Printed by Jouve, 75001 PARIS (FR)

## Beschreibung

Die Erfindung betrifft eine eingefärbte, schwer entflammbare, UV-stabile, thermoformbare, orientierte Folie aus einem kristallisierbaren Thermoplasten, deren Dicke im Bereich von 10 µm bis 500 µm liegt. Die Folie enthält mindestens einen löslichen Farbstoff und/oder ein anorganisches Farbmittel, mindestens ein Flammschutzmittel und mindestens einen UV-Absorber. Sie zeichnet sich durch ihre Einfärbung in Kombination mit guter Verstreckbarkeit und Thermoformbarkeit, durch sehr gute optische und mechanische Eigenschaften und durch eine wirtschaftliche Herstellung aus. Die Erfindung betrifft ferner ein Verfahren zur Herstellung dieser Folie und ihre Verwendung.

Orientierte Folien aus kristallisierbaren Thermoplasten mit einer Dicke von 10 bis 500 µm sind hinreichend bekannt.

Diese Folien enthalten keinerlei Farbstoffe und/oder Farbmittel, keine UV-Absorber als Lichtschutzmittel und keinerlei Flammschutzmittel, so dass sich weder die Folien noch die daraus hergestellten Artikel für Außenanwendungen eignen, wo ein Brandschutz bzw. eine schwere Entflammbarkeit gefordert sind. Die bekannten Folien erfüllen nicht die Brandtests nach DIN 4102 Teil 2 und Teil 1 sowie den UL-Test 94. Die bekannten Folien sind außerdem unzureichend thermoformbar.

Bei Außenanwendungen zeigen die herkömmlichen Folien bereits nach kurzer Zeit eine Vergilbung und eine Verschlechterung ihrer mechanischen Eigenschaften infolge eines photooxidativen Abbaus des Thermoplasten durch Sonnenlicht.

In der **EP-A-0 620 245** sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen.

In der **DE-A 23 46 787** ist ein schwer entflammbarer polymerer Rohstoff beschrieben. Neben dem Rohstoff ist auch die Verwendung des Rohstoffs zu Folien und Fasern beansprucht.

Bei der Herstellung von Folien aus diesem mit Phospholan modifizierten Rohstoff zeigten sich folgende Defizite:

- Der Rohstoff ist sehr hydrolyseempfindlich und muß sehr gut vorgetrocknet werden.
- Beim Trocknen des Rohstoffes mit Trocknern, die dem Stand der Technik entsprechen, verklebt der Rohstoff, so dass eine Folie nur unter schwierigsten Bedingungen herstellbar ist.
- Die unter extremen und unwirtschaftlichen Bedingungen hergestellten Folien verspröden bei Temperaturbelastungen, d. h. die mechanischen Eigenschaften gehen auf Grund der regelrechten Versprödung stark zurück, so dass die Folie unbrauchbar ist. Bereits nach 48 Stunden Temperaturbelastung tritt diese Versprödung auf.

Aufgabe der vorliegenden Erfindung war es, eine eingefärbte, flammhemmend ausgerüstete, UV-stabile, thermoformbare, orientierte Folie mit einer Dicke von 10 bis 500 µm bereitzustellen, die neben einer wirtschaftlichen Herstellung, einer guten Verstreckbarkeit und guten mechanischen sowie optischen Eigenschaften, vor allem eine flammhemmende Wirkung, keine Versprödung nach Temperaturbelastung, eine wirtschaftliche Thermoformbarkeit und eine hohe UV-Stabilität aufweist.

Eine flammhemmende Wirkung bedeutet, dass die Folie gemäß der Erfindung in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Des weiteren soll die Folie den UL-Test 94 "Horizontal Burning Test for Flammability of Plastic Material" bestehen, so dass sie in die Klasse 94 VTM-0 eingestuft werden kann. Das bedeutet, dass die Folie 10 Sekunden nach Wegnahme des Bunsenbrenners nicht mehr brennt, 30 Sekunden nach Wegnahme des Brenners kein Glühen beobachtet wird und auch kein Abtropfen festgestellt wird.

Eine hohe UV-Stabilität bedeutet, dass die Folie durch Sonnenlicht oder andere UV-Strahlung nicht oder nur extrem wenig geschädigt wird, so dass sich die Folie für Außenanwendungen und/oder kritische Innenanwendungen eignet. Insbesondere soll die Folie bei mehrjähriger Außenanwendungen nicht vergilben, keine Versprödungen oder Rißbildung der Oberfläche zeigen und auch keine Verschlechterung der mechanischen Eigenschaften aufweisen. Hohe UV-Stabilität bedeutet demnach, dass die Folie das UV-Licht absorbiert und Licht erst im sichtbaren Bereich hindurchtreten läßt.

Thermoformbarkeit bedeutet, dass sich die Folie auf handelsüblichen Tiefziehmaschinen ohne unwirtschaftliches Vortrocknen zu komplexen und großflächigen Formkörpern tiefziehen bzw. thermoformen läßt.

Zu den guten optischen Eigenschaften zählen beispielsweise eine homogene Einfärbung, ein hoher Oberflächenglanz (≥ 15) sowie ein im Vergleich zur nicht flammschutz- und UVausgerüsteten Folie unveränderter Gelbwert, d.h. eine unveränderte Farbe.

Zu den guten mechanischen Eigenschaften zählen unter anderem ein hoher E-Modul ($E_{MD} \geq 3200$ N/mm$^2$;

$E_{TD} \geq 3500\ N/mm^2$) sowie gute Reißfestigkeitswerte (in MD $\geq 100\ N/mm^2$; in TD $\geq 130\ N/mm^2$).

Zu der guten Verstreckbarkeit zählt, dass sich die Folie bei ihrer Herstellung sowohl in Längs- als auch ich Querrichtung hervorragend und ohne Abrisse orientieren läßt.

Zu der wirtschaftlichen Herstellung zählt, dass die Rohstoffe bzw. die Rohstoffkomponenten, die zur Herstellung der farbigen schwer entflammbaren Folie benötigt werden, mit Industrietrocknern, die dem Standard der Technik genügen, getrocknet werden können. Wesentlich ist, dass die Rohstoffe nicht verkleben und nicht thermisch abgebaut werden. Zu diesen Industrietrocknern nach dem Stand der Technik zählen Vakuumtrockner, Wirbelschichttrockner, Fließbetttrockner, Festbetttrockner (Schachttrockner). Diese Trockner arbeiten bei Temperaturen zwischen 100 und 170 °C, wo die herkömmlich flammhemmend ausgerüsteten Rohstoffe verkleben und bergmännisch abgebaut werden müssen, so dass keine Folienherstellung möglich ist.

Bei dem am schonendsten trocknenden Vakuumtrockner durchläuft der Rohstoff einen Temperaturbereich von ca. 30 bis 130 °C bei einem Vakuum von 50 mbar. Danach ist ein sog. Nachtrocknen in einem Hopper bei Temperaturen im Bereich von 100 bis 130 °C und einer Verweilzeit von 3 bis 6 Stunden erforderlich. Selbst dabei verklebt der herkömmliche Rohstoff extrem.

Keine Versprödungen bei kurzer Temperaturbelastung bedeutet, dass die Folie bzw. der Formkörper nach 100 Stunden Tempervorgang bei 100 °C in einem Umluftofen keine Versprödung und keine schlechten mechanischen Eigenschaften aufweist.

Gelöst wird diese Aufgabe durch eine eingefärbte, thermoformbare Folie mit einer Dicke im Bereich von 10 bis 500 µm, die als Hauptbestandteil einen kristallisierbaren Thermoplasten enthält und deren Kennzeichenmerkmale darin zu sehen sind, dass die Folie mindestens einen in dem Thermoplasten löslichen Farbstoff und/oder ein anorganisches Farbmittel enthält, dass sie zusätzlich mindestens einen UV-Absorber enthält und dass sie zusätzlich dazu mindestens ein Flammschutzmittel enthält.

Der UV-Absorber, das anorganische Farbmittel und/oder der in dem Thermoplasten losliche Farbstoff werden dem Thermoplasten vorzugsweise als Masterbatch während der Folienherstellung zudosiert. Das Flammschutzmittel wird dem Thermoplasten hingegen erfindungsgemäß als Masterbatch bei der Folienherstellung direkt zudosiert.

Die Folie gemäß der Erfindung enthält als Hauptbestandteil einen kristallisierbaren Thermoplasten. Geeignete kristallisierbare bzw. teilkristalline Thermoplasten sind beispielsweise Polyethylenterephthalat, Polybutylenterephthalat, Polyethylennaphthalat oder Mischungen von diesen, wobei Polyethylenterephthalat (PET) bevorzugt ist.

Erfindungsgemäß versteht man unter kristallisierbaren Thermoplasten kristallisierbare Homopolymere, kristallisierbare Copolymere, kristallisierbare Compounds (Mischungen), kristallisierbares Rezyklat und andere Variationen von kristallisierbaren Thermoplasten.

Die Folie gemäß der Erfindung kann sowohl einschichtig als auch mehrschichtig sein. Die Folie kann ebenfalls mit diversen Copolyestern oder Haftvermittlern beschichtet sein.

Die Folie gemäß der Erfindung enthält erfindungsgemäß einen UV-Absorber und ein Flammschutzmittel. Der UV-Absorber wird dem Thermoplasten zweckmäßigerweise über die sogenannte Masterbatch-Technologie direkt bei der Folienherstellung zudosiert, wobei die Menge an UV-Stabilisator vorzugsweise im Bereich zwischen 0,01 und 5 Gew.-%, bezogen auf das Gewicht der Schicht des kristallisierbaren Thermoplasten, liegt.

Die Folie gemäß der Erfindung enthält mindestens ein Flammschutzmittel, das dem Thermoplasten über die sogenannte Masterbatch-Technologie direkt bei der Folienherstellung zudosiert wird, wobei die Menge an Flammschutzmittel im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate, wobei die Halogenverbindungen aufgrund der entstehenden halogenhaltigen Nebenprodukte nachteilig sind. Des weiteren ist die geringe Lichtbeständigkeit einer damit ausgerüsteten Folie neben der Entwicklung von Halogenwasserstoffen im Brandfall extrem nachteilig.

Geeignete Flammschutzmittel, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate und/oder Alkali-/Erdalkalicarbonate in Mengen von 0,01 bis 1,0 Gew.-% eingesetzt. Phenolische Stabilisatoren werden in Mengen von 0,05 bis 0,6 Gew.-%, insbesondere von 0,15 bis 0,3 Gew.-%, und mit einer Molmasse von mehr als 500 g/mol bevorzugt. Die Verbindungen Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind erfindungsgemäß besonders vorteilhaft als Hydrolysestabilisatoren.

Die erfindungsgemäße Folie kann in der Kernschicht und/oder in den Deckschichten ein anorganisches Farbpigment enthalten, wozu anorganische Schwarzpigmente sowie anorganische Buntpigmente zählen, oder sie kann auch organische Buntpigmente enthalten. Die Farbpigmente werden dem Thermoplasten bevorzugt über Masterbatch-Technologie zudosiert, sie können aber auch direkt beim Rohstoffhersteller in den Thermoplasten eingearbeitet werden. Die Menge an Pigment liegt zwischen 0,2 und 40 Gew.-%, vorzugsweise zwischen 0,5 und 25 Gew.-%, bezogen auf das Gewicht des Thermoplasten.

Geeignete Weißpigmente sind vorzugsweise Titandioxid, Bariumsulfat, Calciumcarbonat, Kaolin, Siliciumdioxid, wobei Titandioxid und Bariumsulfat bevorzugt sind.

Typische anorganische Schwarzpigmente sind Rußmodifikationen, die auch gecoatet sein können, Kohlenstoffpigmente, die sich von den Rußpigmenten durch einen höheren Aschegehalt unterscheiden, und oxidische Schwarzpigmente wie Eisenoxidschwarz und Kupfer-, Chrom-, Eisenoxid-Mischungen. (Mischphasenpigmente).

Geeignete anorganische Buntpigmente sind oxidische Buntpigmente, hydroxylhaltige Pigmente, sulfidische Pigmente und Chromate.

Beispiele für oxidische Buntpigmente sind Eisenoxidrot, Titanoxid-Nickeloxid-Antimonoxid-Mischphasenpigmente, Titandioxid-Chromoxid, Antimonoxid-Mischphasenpigmente, Mischungen der Oxide von Eisen, Zink und Titan, Chromoxid Eisenoxidbraun, Spinelle des Systems Kobalt-Aluminium-Titan-Nickel-Zinkoxid und Mischphasenpigmente auf Basis von anderen Metalloxiden.

Typische hydroxylhaltige Pigmente sind beispielsweise Oxid-Hydroxide des dreiwertigen Eisens, wie FeOOH.

Beispiele für sulfidische Pigmente sind Cadmium-Sulfid-Selenide, Cadmium-Zinksulfide, Natrium-Aluminium-Silikat mit polysulfidartig gebundenem Schwefel im Gitter.

Beispiele für Chromate sind Bleichromate, die in den Kristallformen monoklin, rhombisch und tetragonal vorliegen können.

Alle Buntpigmente können wie die Weiß- und Schwarzpigmente sowohl ungecoated als auch anorganisch und/oder organisch gecoatet vorliegen.

Die organischen Buntpigmente teilt man in der Regel in Azopigmente und sogenannte Nicht-Azopigmente auf.

Charakteristisch für die Azopigmente ist die Azo (-N=N-)-Gruppe. Azopigmente können Monoazopigmente, Diazopigmente, Diazokondensationspigmente, Salze von Azofarbsäuren und Mischungen aus den Azopigmenten sein.

Ferner kann die erfindungsgemäße Folie einen im Thermoplasten löslichen Farbstoff enthalten, wobei die Menge an löslichem Farbstoff vorzugsweise im Bereich von 0,01 bis 20,0 Gew.-%, insbesondere im Bereich von 0,05 bis 10,0 Gew.-%, bezogen auf das Gewicht des kristallisierbaren Thermoplasten, liegt.

Unter einem löslichen Farbstoff versteht man Substanzen, die im Polymeren molekular gelöst sind (DIN 55949).

Die farbliche Veränderung der Folie beruht auf der wellenlängenabhängigen Absorption und/oder Streuung des Lichtes. Farbstoffe können Licht nur absorbieren, aber nicht streuen, da eine bestimmte Teilchengröße die physikalische Voraussetzung für eine Streuung ist.

Bei der Einfärbung mit Farbstoff handelt es sich um einen Lösungsprozess. Als Ergebnis dieses Lösungsprozesses ist der Farbstoff molekular beispielsweise in dem kristallisierbaren Thermoplasten gelöst. Derartige Einfärbungen werden als transparent, durchscheinend, transluzent oder opal bezeichnet.

Von den verschiedenen Klassen der löslichen Farbstoffe werden besonders die fett- und aromatenlöslichen Farbstoffe bevorzugt. Dabei handelt es sich beispielsweise um Azo- und Anthrachinonfarbstoffe. Sie eignen sich insbesondere z.B. zur Einfärbung von PET, da aufgrund der hohen Glasübergangstemperaturen von PET die Migration des Farbstoffes eingeschränkt ist. (Literatur: J. Koerner: Lösliche Farbstoffe in der Kunststoffindustrie in "VDI-Gesellschaft Kunststofftechnik"; Einfärben von Kunststoffen, VDI-Verlag, Düsseldorf 1975).

Geeignete lösliche Farbstoffe sind beispielsweise: C.I.Solventgelb 93 (ein Pyrazolonderivat), C.I.Solventgelb 16 (ein fettlöslicher Azofarbstoff), Fluorolgrüngold (ein fluoreszierender polycyclischer Farbstoff), C.I.Solventrot 1 (ein Azofarbstoff), Azofarbstoffe wie Thermoplastrot BS, Sudanrot BB, C.I.Solventrot 138 (ein Anthrachinonderivat), fluoreszierende Benzopyranfarbstoffe wie Fluorolrot GK und Fluorolorange GK, C.I.Solventblau 35 (ein Anthrachinonfarbstoff), C.I.Solventblau 15:1 (ein Phthalocyaninfarbstoff) und viele andere. Geeignet sind auch Mischungen von zwei oder mehreren dieser löslichen Farbstoffe.

Der lösliche Farbstoff und/oder das anorganische Farbmittel werden dem Thermoplasten bevorzugt über Masterbatch-Technologie zudosiert, können aber auch direkt beim Rohstoffhersteller in den Thermoplasten eingearbeitet werden. Die Menge an Farbadditiven liegt zwischen 0,01 und 40 Gew.-%, vorzugsweise zwischen 0,05 und 25 Gew.-%, bezogen auf das Gewicht des kristallisierbaren Thermoplasten.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern durch die auch die mechanisch-physikalischen Eigenschaften negativ beeinflußt werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in alpha-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für die erfindungsgemäße Folie ungeeignet, da sie zur Verfärbung oder Farbänderung führen. Für Folien sind überwiegend organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm, absorbieren. Diese sind insbesondere dann geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine, Benzoxazinone, aromatische Diimide und Triazine, wobei die 2-Hydroxybenzotriazole, die Benzoxazinone und die Triazine bevorzugt sind.

Der oder die UV-Stabilisatoren sind vorzugsweise in der/den Deckschichten der Folie enthalten. Bei Bedarf kann ausnahmsweise auch die Kernschicht mit UV-Stabilisator ausgerüstet sein.

Es war völlig überraschend, dass der Einsatz der oben genannten UV-Stabilisatoren in Folien zu dem gewünschten Ergebnis führte. Der Fachmann hätte vermutlich zunächst versucht, eine gewisse UV-Stabilität über ein Antioxidanz zu erreichen. Er hätte jedoch bei Bewitterung schnell festgestellt, dass die Folie sofort gelb wird.

Vor dem Hintergrund, dass UV-Stabilisatoren das UV-Licht absorbieren und somit Schutz bieten, hätte der Fachmann wohl handelsübliche Stabilisatoren eingesetzt. Dabei hätte er festgestellt, dass

- der UV-Stabilisator eine mangelnde thermische Stabilität hat und sich bei Temperaturen zwischen 200 und 240 °C zersetzt und ausgast;
- er große Mengen (ca. 10 bis 15 Gew.-%) UV-Stabilisator einarbeiten muß, damit das UV-Licht wirklich wirksam absorbiert wird und damit die Folie nicht geschädigt wird.

Bei diesen hohen Konzentrationen hätte er festgestellt, dass die Folie schon nach der Herstellung Farbunterschiede zeigt. Desweiteren hätte er festgestellt, dass die mechanischen Eigenschaften negativ beeinflußt werden. Beim Verstrecken hätte er ungewöhnliche Probleme bekommen wie

- Abrisse wegen mangelnder Festigkeit, d. h. E-Modul zu niedrig;
- Düsenablagerungen, was zu Profilschwankungen führt;
- Walzenablagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Daherwar es mehr als überraschend, dass erfindungsgemäß bereits mit geringen Mengen an UV-Stabilisator ein hervorragender UV-Schutz erzielt wurde. Sehr überraschend war, dass sich bei diesem hervorragenden UV-Schutz

- die Farbe der Folie im Vergleich zu einer nicht stabilisierten Folie im Rahmen der Meßgenauigkeit nicht ändert;
- sich keine Ausgasungen, keine Düsenablagerungen und keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf sogenannten »high speed film lines« bis zu Geschwindigkeiten von 420 m/min produktionssicher

hergestellt werden kann.

Es war mehr als überraschend, dass mittels Masterbatch-Technologie, einer geeigneten Vortrocknung und/ oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Damit ist die erfindungsgemäße Folie auch wirtschaftlich rentabel.

Es war ebenfalls überraschend, dass sich die erfindungsgemäße Folie durch ein im Vergleich zum Standardthermoplasten höheren Diethylenglykolgehalt und/oder Polyethylenglykolgehalt und/oder IPA-Gehalt wirtschaftlich auf handelsüblichen Tiefziehanlagen thermoformen läßt und dabei eine hervorragende Detailwiedergabe liefert.

Des weiteren ist sehr überraschend, dass auch das bei der Herstellung der Folie oder der Formkörper anfallende Verschnittmaterial, das als Regenerat bezeichnet wird, wieder für den Herstellprozess einsetzbar ist, ohne dass die Farbe der damit hergestellten Folie negativ beeinflusst wird.

In einer bevorzugten Ausführungsform enthält die erfindungsgemäße Folie als Hauptbestandteil ein kristallisierbares Polyethylenterephthalat, mit einem Diethylenglykolgehalt von ≥ 1,0 Gew.%, vorzugsweise ≥ 1,2 Gew.%, insbesondere ≥ 1,3 Gew.% und/oder einem Polyethylenglykolgehalt (PEG-Gehalt) von ≥ 1,0 Gew.%, vorzugsweise ≥ 1,2 Gew.%, insbesondere ≥ 1,3 Gew.% und/oder einem Isophthalsäuregehalt (IPA) im Bereich von 1,5 bis 10 Gew.-%, eine Menge im Bereich von 1 bis 20 Gew.-% an einer organischen, in PET löslichen Phosphorverbindung (Dimethyl-Methylphosphonat) als Flammschutzmittel, eine Menge im Bereich von 0,01 bis 5,0 Gew.-% an einem in PET löslichen UV-Absorber aus der Gruppe der 2-Hydroxybenzotriazole oder der Triazine und eine Menge im Bereich von 0,05 bis 25 Gew.-% an löslichem Farbstoff und/oder anorganischem Farbmittel.

In einer ganz besonders bevorzugten Ausführungsform enthält die erfindungsgemäße Folie 0,01 bis 5,0 Gew.-% 2-(4,6-Diphenyl-1,3,5-triazin-2-yl)-5-(hexyl)oxy-phenol der Formel

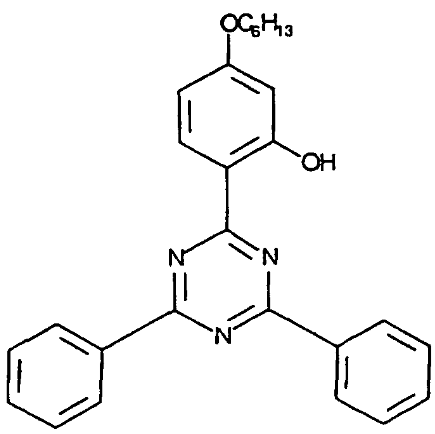

oder 0,01 bis 5,0 Gew.-% 2,2-Methylen-bis(6-(2H-benzotriazol-2-yl)-4-(1,1,2,2-tetramethylpropyl)-phenol der Formel

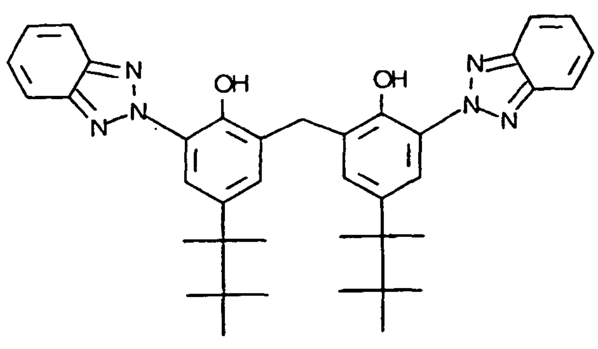

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 und 5,0 Gew.-%, bezogen auf das Gewicht an kristallisierbarem Polyethylenterephthalat, liegt.

Erfindungswesentlich für die Thermoformbarkeit ist, dass der kristallisierbare Thermoplast einen Diethylenglykolgehalt (DEG-Gehalt) von ≥ 1,0 Gew.%, vorzugsweise ≥ 1,2 Gew.%, insbesondere ≥ 1,3 Gew.% und/oder einen Polyethylenglykolgehalt (PEG-Gehalt) von ≥ 1,0 Gew.%, vorzugsweise ≥ 1,2 Gew.%, insbesondere ≥ 1,3 Gew.% und/oder einen Isophthalsäuregehalt (IPA) im Bereich von 1,5 Gew.-% bis 10 Gew.-% aufweist.

Die eingefärbte, UV-stabilisierte, thermoformbare, schwer entflammbare Folie hat folgendes Eigenschaftsprofil:

Der Oberflächenglanz, gemessen nach DIN 67530 (Meßwinkel 20°), ist größer als 15, vorzugsweise größer als 20, die Lichttransmission L von gedeckt eingefärbten Folien, gemessen nach ASTM D 1003 beträgt weniger als 70 %, vorzugsweise weniger als 60 %, welches für die erzielte UV-Stabilität in Kombination mit der schweren Entflammbarkeit überraschend gut ist. Die Lichttransmission von transparent eingefärbten Folien beträgt ≥ 50%, vorzugsweise ≥ 60%, insbesondere ≥ 70%, gemessen nach ASTM D 1003.

Die Standardviskosität SV (DCE) des Polyethylenterephthalats, gemessen in Dichloressigsäure nach DIN 53728, liegt zwischen 600 und 1100, vorzugsweise zwischen 700 und 1000.

Die eingefärbte Polyethylenterephthalat-Folie, die mindestens einen in PET löslichen Farbstoff und/oder ein anorganisches Farbmittel, mindestens einen UV-Stabilisator und mindestens ein Flammschutzmittel enthält, kann sowohl einschichtig als auch mehrschichtig sein.

In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, dass das PET der Kernschicht eine ähnliche Standardviskosität und einen ähnlichen DEG-Gehalt und/oder PEG-Gehalt und/oder IPA-Gehalt besitzt, wie das PET der Deckschicht (en), die an die Kernschicht angrenzt (angrenzen).

In einer besonderen Ausführungsform können die Deckschichten auch aus einem PET-Homopolymeren oder aus einem Polyethylenterephthalat-Polyethylennaphthalat-Copolymeren oder einem Compound bestehen.

In dieser Ausführungsform haben die Thermoplaste der Deckschichten ebenfalls eine ähnliche Standardviskosität und einen ähnlichen DEG-Gehalt und/oder PEG-Gehalt und/oder IPA-Gehalt wie das PET der Kernschicht.

In der mehrschichtigen Ausführungsform ist der UV-Absorber vorzugsweise in den Deckschichten enthalten. Bei Bedarf kann auch die Kernschicht mit UV-Absorber ausgerüstet sein.

In der mehrschichtigen Ausführungsform ist der Farbstoff und/oder das Farbmittel und das Flammschutzmittel vorzugsweise in der Kernschicht enthalten. Jedoch können bei Bedarf auch die Deckschichten mit Farbadditiven und/oder Flammschutzmittel ausgerüstet sein.

In einer anderen Ausführungsform können auch Farbstoff/Farbmittel, Flammschutzmittel und UV-Absorber in den Deckschichten enthalten sein. Bei Bedarf und hohen Brandschutz-Anforderungen kann in dieser letztgenannten anderen Ausführungsform die Kernschicht additiv eine sogenannte "Grundausrüstung" an Flammschutzmittel enthalten.

Anders als in der einschichtigen Ausführungsform beziehen sich bei den mehrschichtigen Ausführungsformen der erfindungsgemäßen Folie die Mengenangaben für die Farbadditive, das Flammschutzmittel und den UV-Stabilisator auf das Gewicht des Thermoplasten in der jeweils ausgerüsteten Schicht.

Ganz überraschend haben Bewitterungsversuche nach der Testspezifikation ISO 4892 mit dem Atlas CI65 Weather Ometer gezeigt, dass es im Falle einer dreischichtigen Folie durchaus ausreichend ist, die 0,5 bis 2 μm dicken Deckschichten mit UV-Stabilisator auszurüsten, um eine verbesserte UV-Stabilität der ganzen Folie zu erreichen.

Brandversuche nach DIN 4102 Teil 1 und Teil 2 sowie der UL-Test 94 haben ebenso überraschend gezeigt, dass die erfindungsgemäße Folie schon im Dickenbereich von 10 bis 500 μm die entsprechenden Anforderungen erfüllen.

Dadurch werden die mit der bekannten Koextrusionstechnologie hergestellten schwerentflammbaren, UV-stabilisierten, thermoformbaren, mehrschichtigen Folien im Vergleich zu den komplett UV-stabilisierten und flammausgerüsteten Monofolien wirtschaftlich extrem interessant, da deutlich weniger Additive für eine vergleichbare Qualität, was die schwere Entflammbarkeit und UV-Stabilität betrifft, benötigt werden.

Die Folie kann auch mindestens einseitig mit einer kratzfesten Beschichtung, mit einem Copolyester oder mit einem Haftvermittler versehen sein.

Bewitterungstests haben ergeben, dass die erfindungsgemäßen schwerentflammbaren, UV-stabilisierten Folien selbst nach 5 bis 7 Jahren (aus den Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Messungen ergaben, dass die erfindungsgemäße Folie bzw. der Formkörper bei Temperaturbelastungen von 100 °C über einen längeren Zeitraum nicht versprödet. Dieses Resultat ist auf die synergistische Wirkung von geeigneter Vorkristallisation, Vortrocknung, Masterbatch-Technologie und UV-Stabilisatorausrüstung zurückzuführen.

Die erfindungsgemäße Folie läßt sich ohne Vortrocknen thermoformen, so dass komplexe Formkörper daraus hergestellt werden können.

Der Thermoformprozeß umfaßt in der Regel die Schritte Vortrocknen, Aufheizen, Formen, Abkühlen, Entformen, Tempern. Beim Thermoformprozeß wurde festgestellt, dass sich die erfindungsgemäße Folie ohne vorheriges Vortrocknen überraschenderweise tiefziehen lässt. Dieser Vorteil im Vergleich zu tiefziehfähigen Polycarbonat- oder Polymethacrylat-Folien, bei denen Vortrocknungszeiten von 10 bis 15 Stunden, je nach Dicke bei Temperaturen von 100 bis 120 °C erforderlich sind, reduziert drastisch die Kosten des Umformprozesses.

Für das Thermoformen wurden folgende Verfahrensparameter gefunden:

| Verfahrensschritt | Erfindungsgemäße Folie |
|---|---|
| Vortrocknen | nicht erforderlich |
| Temperatur der Form [°C] | 100 bis 160 |
| Aufheizzeit | ≤ 5 sec pro 10 µm Foliendicke |
| Folientemperatur beim Verformen [°C] | 160 bis 220 |
| Möglicher Verstreckfaktor | 1,5 bis 2,0 |
| Detailwiedergabe | gut |
| Schrumpf (Schwindung) [%] | ≤ 1,5 |

Des weiteren ist die erfindungsgemäße Folie bzw. der daraus hergestellte Formkörper ohne Umweltbelastung und ohne Verlust der mechanischen Eigenschaften problemlos rezyklierbar, wodurch sie sich beispielsweise für die Verwendung als Möbelfolie, für kurzlebige Werbeschilder, für den Messebau und andere Werbeartikel, wo Brandschutz, UV-Stabilität und Thermoformbarkeit gewünscht wird, eignet.

Die Herstellung der erfindungsgemäßen, eingefärbten, schwerentflammbaren, thermoformbaren, UV-stabilen Folie kann beispielsweise nach dem Extrusionsverfahren in einer Extrusionsstraße erfolgen.

Erfindungsgemäß wird das Flammschutzmittel über die Masterbatch-Technologie zugegeben. Das Flammschutzmittel wird in einem Trägermaterial voll dispergiert. Als Trägermaterial kommen der Thermoplast selbst, wie z. B. das PET oder auch andere Polymere, die mit dem Thermoplasten verträglich sind, in Frage.

Erfindungsgemäß kann der UV-Stabilisator und das Farbadditiv bereits beim Thermoplast-Rohstoffhersteller zudosiert werden oder bei der Folienherstellung in den Extruder dosiert werden.

Der DEG-Gehalt und/oder PEG-Gehalt und/oder IPA-Gehalt des Polyethylenterephthalates werden beim Rohstoffhersteller während des Polykondensationsprozesses eingestellt.

Besonders bevorzugt ist die Zugabe des Farbadditivs und des UV-Stabilisators über die Masterbatch-Technologie. Der UV-Stabilisator bzw. das Farbadditiv wird in einem festen Trägermaterial voll dispergiert. Als Trägermaterialien kommen der Thermoplast selbst, wie z. B. das PET oder auch andere Polymere, die mit dem Thermoplasten ausreichend verträglich sind, in Frage.

Wichtig bei der Masterbatch-Technologie ist, dass die Korngröße und das Schüttgewicht des Masterbatches ähnlich der Korngröße und dem Schüttgewicht des Thermoplasten ist, so dass eine homogene Verteilung und damit eine homogene UV-Stabilisierung erfolgen kann.

Die erfindungsgemäße Polyesterfolie kann nach bekannten Verfahren aus einen Polyesterrohstoff mit ggf. weiteren Rohstoffen, dem Flammschutzmittel, dem Farbadditiv, dem UV-Absorber, gegebenenfalls dem Hydrolysestabilisator und/oder weiteren üblichen Additiven in üblicher Menge von 1,0 bis max. 30 Gew.-% sowohl als Monofolie als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck im Bereich von 20 bis 80 mbar, vorzugsweise von 30 bis 60 mbar, insbesondere von 40 bis 50 mbar, und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Kern- und/oder Deckschichten und ggf. anderen Rohstoffkomponenten chargenweise in einem Vakuumtrockner, der im Laufe derTrocken- bzw. Verweilzeit ein Temperaturspektrum von 10 bis 160 °C, vorzugsweise von 20 bis 150 °C, insbesondere von 30 bis 130 °C, durchläuft, gefüllt. Während der ca. 6-stündigen, vorzugsweise 5-stündigen, insbesondere 4-stündigen, Verweilzeit

wird die Rohstoffmischung mit 10 bis 70 Upm, vorzugsweise mit 15 bis 65 Upm, insbesondere mit 20 bis 60 Upm, gerührt. Das so vorkristallisierte bzw. vorgetrocknete Rohstoffgemisch wird in einem nachgeschalteten ebenfalls evakuierten Behälter bei 90 bis 180 °C, vorzugsweise 100 bis 170 °C, insbesondere 110 bis 160 °C, für 2 bis 8 Stunden, vorzugsweise 3 bis 7 Stunden, insbesondere 4 bis 6 Stunden, nachgetrocknet.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 K bis $T_G$ + 60 K ($T_G$ = Glastemperatur), das Streckverhältnis der Längsstreckung liegt üblicherweise bei 2 bis 6, insbesondere bei 3 bis 4,5, das der Querstreckung liegt bei 2 bis 5, insbesondere bei 3 bis 4,5 und das der ggf. durchgeführten zweiten Längs- bzw. Querstreckung liegt bei 1,1 bis 5. Die erste Längsstrekkung kann ggf. gleichzeitig mit der Querstreckung (Simultanstreckung) durchgeführt werden. Anschließend folgt die Thermofixierung der Folie bei Ofentemperaturen von 180 bis 260 °C, insbesondere bei 220 bis 250 °C. Anschließend wird die Folie abgekühlt und gewickelt.

Durch die überraschende Kombination ausgezeichneter Eigenschaften eignet sich die erfindungsgemäße Folie hervorragend für eine Vielzahl verschiedener Anwendungen, beispielsweise für Möbelfolien, für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Aufgrund der Thermoformbarkeit eignet sich die erfindungsgemäße Folie zum Thermoformen beliebiger Formkörper für Innen- und Außenanwendungen.

Die Erfindung wird im folgenden anhand von Ausführungsbeispielen näher erläutert.

Die Messungen der einzelnen Eigenschaften erfolgt dabei gemäß der folgenden Normen bzw. Verfahren.

**Meßmethoden**

**DEG-Gehalt/PEG-Gehalt/IPA-Gehalt**

Der DEG-/PEG-/IPA-Gehaltwird gaschromatographisch nach Verseifung in methanolischer KOH und Neutralisation mit wässriger HCl bestimmt.

**Oberflächenglanz**

Der Oberflächenglanz wird bei einem Meßwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Messgerät "®HAZEGARD plus" nach ASTM D 1003 gemessen.

**Trübung**

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.

Die Trübung wird mit dem Messgerät "HAZEGARD plus" nach ASTM D 1003.

**Oberflächendefekte**

Die Oberflächendefekte werden visuell bestimmt.

**Mechanische Eigenschaften**

Der E-Modul und die Reißfestigkeit und die Reißdehnung werden in Längs- und Querrichtung nach ISO 527-1-2 gemessen.

**SV (DCE), IV (DVE)**

Die Standardviskosität SV (DCE) wird angelehnt an DIN 53726 in Dichloressigsäure gemessen.

Die intrinsische Viskosität (IV) berechnet sich wie folgt aus der Standardviskosität

$$IV (DCE) = 6{,}67 \cdot 10^{-4}\ SV (DCE) + 0{,}118$$

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

**Bewitterung (beidseitig), UV-Stabilität**

Die UV-Stabilität wird nach der Testspezifikation ISO 4892 wie folgt geprüft:

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 $W/m^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

Bei nachstehenden Beispielen und Vergleichsbeispielen handelt es sich jeweils um eingefärbte Folien unterschiedlicher Dicke, die auf der beschriebenen Extrusionsstraße hergestellt werden.

Alle Folien wurden nach der Testspezifikation ISO 4892 je 1000 Stunden mit dem Atlas Ci 65 Weather Ometer der Fa. Atlas bewittert und anschließend bezüglich der mechanischen Eigenschaften, dem Gelbwert (YID), der Oberflächendefekte, der Lichttransmission und des Glanzes geprüft.

An allen Folien wurden Brandtests nach DIN 4102, Teil 2 und Teil 1 und nach UL-Test 94 durchgeführt.

**Beispiel 1**

Es wurde eine 50 µm dicke gedeckt eingefärbte Monofolie hergestellt, die als Hauptbestandteil Polythylenterephthalat (Typ K135, KoSa, Deutschland) mit einem DEG-Gehalt von 1,3 Gew.-% (Klarrohstoff) enthielt und die zusätzlich eine Menge von 0,5 Gew.-% UV-Stabilisator (®Tinuvin 1577, Ciba Geigy, Schweiz), eine Menge von 1,5 Gew.-% Flammschutzmittel (®Amgard P1045, Albright&Wilson), eine Menge von 0,15 Gew-% Hydrolysestabilisator (®Irgafos TNPP, Molekulargewicht 689 g/mol, Ciba Geigy, Schweiz) sowie eine Menge von 6,4 Gew.-% Pigmentblau 28 ($CoAl_2O_4$ Spinell, Kobaltblau, Degussa, Deutschland) enthielt.

Der UV-Stabilisator, das Flammschutzmittel und der Hydrolysestabilisator wurden dem PET in Form von Masterbatchen zudosiert. Der Farbstoff wurde direkt beim Rohstoffhersteller zugegeben.

Masterbatch (1) enthielt 20 Gew.-% UV-Stabilisator sowie 80 Gew.-% Klarrohstoff. Masterbatch (2) enthielt 25 Gew.-% Flammschutzmittel, 2,5% Hydrolysestabilisator sowie 72,5% Klarrohstoff.

Vor der Extrusion wurden 2,5 Gew.-% des Masterbatch (1), 6 Gew.-% des Masterbatch (2) und 91,5 Gew.-% Klarrohstoff, in den 7 Gew.-% blauer Farbstoff eingearbeitet worden waren, bei einer Temperatur von 150 °C getrocknet und anschließend im Extruder aufgeschmolzen.

**Beispiel 2**

Es wurde eine 50 µm dicke transparent eingefärbte Monofolie hergestellt, die als Hauptbestandteil Polythylenterephthalat (Typ K135, KoSa, Deutschland) mit einem DEG-Gehalt von 1,3 Gew.-% enthielt und die zusätzlich eine Menge von 0,5 Gew.-% UV-Stabilisator (Tinuvin 1577, Ciba Geigy, Schweiz), eine Menge von 1,5 Gew.-% Flammschutzmittel (Amgard P1045, Albright&Wilson), eine Menge von 0,15 Gew.-% Hydrolysestabilisator (Irgafos TNPP, Molekulargewicht 689 g/mol, Ciba Geigy, Schweiz) sowie eine Menge von 1,5 Gew.-% Solventblau 35 (fettlöslicher

Anthrachinon-Farbstoff, ®Sudanblau 2, BASF, Deutschland) enthielt.

Der UV-Stabilisator, das Flammschutzmittel und der Hydrolysestabilisator sowie das Farbmittel wurden dem PET in Form von Masterbatchen zudosiert.

Masterbatch (1) enthielt 20 Gew.-% UV-Stabilisator sowie 80 Gew.-% Klarrohstoff.
Masterbatch (2) enthielt 25 Gew.-% Flammschutzmittel, 2,5 Gew.-% Hydrolysestabilisator sowie 72,5 Gew.-% Klarrohstoff.
Masterbatch (3) enthielt 20 Gew.-% blaues Farbmittel sowie 80 Gew.-% Klarrohstoff.

Vor der Extrusion wurden 2,5 Gew.-% von Masterbatch (1), 6 Gew.-% von Masterbatch (2), 7,5 Gew.-% von Masterbatch (3) und 84 Gew.-% Klarrohstoff bei einer Temperatur von 150 °C getrocknet und anschließend im Extruder aufgeschmolzen.

**Beispiel 3**

Es wurde eine 75 µm dicke, koextrudierte, gedeckt eingefärbte ABA-Folie hergestellt, wobei A die Deckschichten und B die Kernschicht symbolisiert. Die Rezeptur der 71 µm dicken Kernschicht entsprach der Rezeptur der Folie aus Beispiel 1. Die 2 µm dicken Deckschichten enthielten 93 Gew.-% Klarrohstoff sowie 7 Gew.-% eines Masterbatches, das neben Klarrohstoff 10.000 ppm Siliciumdioxid (®Sylobloc, Grace, Deutschland) enthielt. Diese Folie zeichnete sich durch einen besonders hohen Oberflächenglanz aus.

**Beispiel 4**

Es wurde eine 75 µm dicke, koextrudierte, transparent eingefärbte ABA-Folie hergestellt, wobei A die Deckschichten und B die Kernschicht symbolisiert. Die Rezeptur der 71 µm dicken Kernschicht entsprach der Rezeptur der Folie aus Beispiel 2. Die 2 µm dicken Deckschichten enthielten 93 Gew.-% Klarrohstoff sowie 7 Gew.-% eines Masterbatches, das neben Klarrohstoff 10.000 ppm Siliciumdioxid (Sylobloc, Grace, Deutschland) enthielt. Diese Folie zeichnete sich auch durch einen besonders hohen Oberflächenglanz aus.

**Vergleichsbeispiel 1**

Es wurde eine 50 µm dicke gedeckt eingefärbte Monofolie hergestellt. Die Rezeptur entsprach der Rezeptur der Folie aus Beispiel 1, jedoch ohne Zusatz von Masterbatch (1), also ohne UV-Stabilisator.

**Vergleichsbeispiel 2**

Es wurde eine 50 µm dicke gedeckt eingefärbte Monofolie hergestellt. Die Rezeptur entsprach der Rezeptur der Folie aus Beispiel 1, jedoch ohne Zusatz von Masterbatch (2), also ohne Flammschutzmittel und ohne Hydrolysestabilisator.

**Vergleichsbeispiel 3**

Es wurde eine 50 µm dicke gedeckt eingefärbte Monofolie hergestellt. Die Rezeptur entsprach der Rezeptur der Folie aus Beispiel 1, jedoch ohne Zusatz von Masterbatch (1) und ohne Zusatz von Masterbatch (2), also ohne UV-Stabilisator, ohne Flammschutzmittel und ohne Hydrolysestabilisator.

**Vergleichsbeispiel 4**

Es wurde eine 50 µm dicke gedeckt eingefärbte Monofolie hergestellt. Die Rezeptur entsprach der Rezeptur der Folie aus Beispiel 1, jedoch wurde anstelle des Klarrohstoffs K135 der Typ RT49 (KoSa, Deutschland) mit einem DEG-Gehalt von 0,6 Gew.-% verwendet.

Die nach den vorstehend beschriebenen Beispielen und Vergleichsbeispielen hergestellten blauen PET-Folien haben folgendes Eigenschaftsprofil:

| Eigenschaften | Bsp. 1 | Bsp. 2 | Bsp. 3 | Bsp. 4 | Vgl. -Bsp. 1 | Vgl. -Bsp. 2 | Vgl.-Bsp. 3 | Vgl.Bsp. 4 |
|---|---|---|---|---|---|---|---|---|
| Dicke [µm] | 50 | 50 | 75 | 75 | 50 | 50 | 50 | 50 |

(fortgesetzt)

| Eigenschaften | Bsp. 1 | Bsp. 2 | Bsp. 3 | Bsp. 4 | Vgl. -Bsp. 1 | Vgl. -Bsp. 2 | Vgl.-Bsp. 3 | Vgl.Bsp. 4 |
|---|---|---|---|---|---|---|---|---|
| Oberflächenglanz 1. Seite | 55 | 130 | 170 | 165 | 55 | 53 | 50 | 55 |
| (Meßwinkel 20°) 2. Seite | 53 | 135 | 170 | 170 | 52 | 53 | 55 | 55 |
| Lichttransmission/ Transparenz [%] | 28 | 84 | 24 | 81 | 29 | 27 | 28 | 28 |
| E-Modul längs [N/mm$^2$] | 4400 | 4500 | 4350 | 4350 | 4400 | 4350 | 4400 | 4450 |
| E-Modul quer [N/mm$^2$] | 5500 | 5600 | 5800 | 5750 | 5600 | 5550 | 5600 | 5450 |
| Reißfestigkeit längs [N/ mm$^2$] | 210 | 215 | 210 | 215 | 215 | 205 | 210 | 220 |
| Reißfestigkeit quer [N/ mm$^2$] | 260 | 255 | 265 | 260 | 260 | 255 | 250 | 260 |
| Reißdehnung längs [%] | 135 | 135 | 140 | 125 | 125 | 125 | 140 | 135 |
| Reißdehnung quer [%] | 75 | 80 | 65 | 65 | 75 | 70 | 75 | 75 |
| Einfärbung<br>1 =homogen gedeckt blau eingefärbt<br>2=homogen transparent blau eingefärbt | 1 | 2 | 1 | 2 | 1 | 1 | 1 | 1 |

**Thermoformbarkeit**

Die Folien aus den Beispielen 1 bis 4 sowie aus den Vergleichsbeispielen 1 bis 3 ließen sich auf handelsüblichen Tiefziehmaschinen z. B. von Fa. Illig ohne Vortrocknung zu Formkörpern thermoformen. Die Folie aus Vergleichsbeispiel 4 war nur unzureichend thermoformbar.

**Ergebnisse des Bewitterungstests**

Nach 1000 Stunden Bewitterung mit dem Atlas CI 65 Weather Ometer unterschieden sich die Folien der Beispiele 1 bis 4 sowie der Vergleichsbeispiele 2 und 4 optisch nicht von unbewitterten Folien. Die mechanischen Eigenschaften waren im Vergleich zu unbewitterten Folien unverändert. Nach 1000 Stunden Bewitterung mit dem Atlas CI 65 Weather Ometer wiesen die Folien aus den Vergleichsbeispielen 1 und 3 an den bewitterten Oberflächen Risse und Versprödungserscheinungen auf. Ein präzises Eigenschaftsprofil konnte daher nicht mehr gemessen werden. Außerdem zeigten die Folien eine visuell sichtbare Farbänderung in Richtung gelb (Gelbstichigkeit).

**Ergebnisse der Brandprüfung**

Die Folien aus den Beispielen 1 bis 4 sowie der Vergleichbeispiele 1 und 4 erfüllten nach DIN4102 die Baustoffklassen B2 und B1.
Die Folien aus den Vergleichsbeispielen 2 und 3 erfüllten aber nach DIN4102 die Baustoffklassen B2 und B1 nicht.

**Patentansprüche**

1. Gefärbte, thermoformbare Folie mit einer Dicke im Bereich von 10 bis 500 µm, die als Hauptbestandteil einen kristallisierbaren Thermoplasten enthält, **dadurch gekennzeichnet, dass** die Folie mindestens einen in dem Thermoplasten löslichen Farbstoff und/oder ein anorganisches Farbmittel enthält, dass sie zusätzlich mindestens einen UV-Absorberenthält und dass sie zusätzlich dazu mindestens ein Flammschutzmittel enthält.

2. Gefärbte Folie nach Anspruch 1, **dadurch gekennzeichnet, dass** der kristallisierbare Thermoplast ausgewählt ist aus der Gruppe enthaltend Polyethylenterephthalat, Polybutylenterephthalat, Polyethylennaphthalat oder Mischungen von diesen, wobei Polyethylenterephthalat (PET) bevorzugt ist.

3. Gefärbte Folie nach Anspruch 1 oder 2, **dadurch gekennzeichnet, dass** sie den UV-Absorber in einer Menge im Bereich zwischen 0,01 und 5 Gew.-%, bezogen auf das Gewicht der Schicht des kristallisierbaren Thermoplasten, enthält und dass sie das Flammschutzmittel, das dem Thermoplasten über die Masterbatch-Technologie direkt bei der Folienherstellung zudosiert wird, in einer Menge im Bereich von 0,5 bis 30,0 Gew.-%, vorzugsweise von 1,0 bis 20,0 Gew.-%, bezogen auf das Gewicht der Schicht des kristallisierbaren Thermoplasten, enthält.

4. Gefärbte Folie nach einem der Ansprüche 1 bis 3, **dadurch gekennzeichnet, dass** sie als Flammschutzmittel organische Phosphorverbindungen wie Carboxyphosphinsäuren, deren Anhydride oder Dimethyl-methylphosphonat enthält und dass sie zusätzlich einen Hydrolysestabilisator in einer Menge von 0,01 bis 1,0 Gew.-% enthält.

5. Gefärbte Folie nach einem der Ansprüche 1 bis 4, **dadurch gekennzeichnet, dass** sie als anorganisches Farbpigment anorganisches Schwarzpigment oder anorganisches Buntpigment enthält oder dass sie organisches Buntpigment enthält und dass die Menge an Pigment im Bereich von 0,2 bis 40 Gew.-%, vorzugsweise von 0,5 bis 25 Gew.-%, bezogen auf das Gewicht des Thermoplasten liegt.

6. Gefärbte Folie nach einem der Ansprüche 1 bis 4, **dadurch gekennzeichnet, dass** sie einen im Thermoplasten löslichen Farbstoff enthält und dass die Menge an löslichem Farbstoff im Bereich von 0,01 bis 20,0 Gew.-%, insbesondere im Bereich von 0,05 bis 10,0 Gew.-%, bezogen auf das Gewicht des kristallisierbaren Thermoplasten, liegt.

7. Gefärbte Folie nach einem der Ansprüche 1 bis 6, **dadurch gekennzeichnet, dass** sie als UV-Stabilisator ein Lichtschutzmittel ausgewählt aus der Gruppe enthaltend 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine, Benzoxazinone, aromatische Diimide und Triazine enthält, wobei die 2-Hydroxybenzotriazole, die Benzoxazinone und die Triazine bevorzugt sind.

8. Gefärbte Folie nach einem der Ansprüche 1 bis 7, **dadurch gekennzeichnet, dass** sie als Hauptbestandteil ein kristallisierbares Polyethylenterephthalat, mit einem Diethylenglykolgehalt von ≥ 1,0 Gew.%, vorzugsweise ≥ 1,2 Gew.%, insbesondere ≥ 1,3 Gew.% und/oder einem Polyethylenglykolgehalt (PEG-Gehalt) von ≥ 1,0 Gew.%, vorzugsweise ≥ 1,2 Gew.%, insbesondere ≥ 1,3 Gew.% und/oder einem Isophthalsäuregehalt (IPA) im Bereich von 1,5 bis 10 Gew.-%, eine Menge im Bereich von 1 bis 20 Gew.-%, an einer organischen, in PET löslichen Phosphorverbindung (Dimethyl-Methylphosphonat) als Flammschutzmittel, eine Menge im Bereich von 0,01 bis 5,0 Gew.-% an einem in PET löslichen UV-Absorber aus der Gruppe der 2-Hydroxybenzotriazole oder der Triazine und eine Menge im Bereich von 0,05 bis 25 Gew.-% an löslichem Farbstoff und/oder anorganischem Farbmittel enthält.

9. Gefärbte Folie nach einem der Ansprüche 1 bis 8, **dadurch gekennzeichnet, dass** sie einen Oberflächenglanz, gemessen nach DIN 67530 (Meßwinkel 20°), von größer als 15, vorzugsweise größer als 20, eine Lichttransmission L von gedeckt eingefärbten Folien, gemessen nach ASTM D 1003 von weniger als 70 %, vorzugsweise weniger als 60 %, und eine Lichttransmission von transparent eingefärbten Folien von ≥ 50%, vorzugsweise ≥ 60%, insbesondere ≥ 70%, gemessen nach ASTM D 1003, aufweist.

10. Gefärbte Folie nach einem der Ansprüche 1 bis 9, **dadurch gekennzeichnet, dass** sie einschichtig oder mehrschichtig ist, wobei sie in der mehrschichtigen Ausführungsform aus mindestens einer Kernschicht und mindestens einer Deckschicht aufgebaut ist und wobei insbesondere ein dreischichtiger A-B-A oder A-B-C Aufbau bevorzugt ist.

11. Verfahren zum Herstellen einer gefärbten, schwer entflammbaren, thermoformbaren, UV-stabilen Folie nach einem der Ansprüche 1 bis 10 durch Extrusion in einer Extrusionsstraße, wobei das aufgeschmolzene Thermoplastmaterial durch eine Schlitzdüse extrudiert und als weitgehend amorphe Vorfolie auf einer Kühlwalze abgeschreckt, diese Vorfolie anschließend erneut erhitzt und in Längs- und Querrichtung bzw. in Quer- und Längsrichtung bzw. in Längs-, in Quer- und nochmals und Längsrichtung und/oder Querrichtung gestreckt wird, wobei die Strecktemperaturen auf $T_G$ + 10 K bis $T_G$ + 60 K eingestellt werden, und wobei das Streckverhältnis der Längsstreckung bei 2 bis 6, insbesondere bei 3 bis 4,5, das der Querstreckung bei 2 bis 5, insbesondere bei 3 bis 4,5 und das der ggf.

durchgeführten zweiten Längs- bzw. Querstreckung bei 1,1 bis 5 eingestellt werden und wobei dann die Thermofixierung der Folie bei Ofentemperaturen von 180 bis 260 °C, insbesondere bei 220 bis 250 °C erfolgt, **dadurch gekennzeichnet, dass** das Flammschutzmittel dem Thermoplasten über die Masterbatch-Technologie zugegeben wird, wobei das Flammschutzmittel in einem Trägermaterial voll dispergiert ist und wobei als Trägermaterial der Thermoplast selbst oder andere Polymere, die mit dem Thermoplasten verträglich sind, eingesetzt werden.

**12.** Verfahren nach Anspruch 11, **dadurch gekennzeichnet, dass** die Zugabe des Farbadditivs und des UV-Stabilisators zu dem Thermoplasten über die Masterbatch-Technologie vorgenommen wird, wobei der UV-Stabilisator und das Farbadditiv in einem festen Trägermaterial voll dispergiert werden und wobei als Trägermaterialien der Thermoplast selbst oder andere Polymere, die mit dem Thermoplasten ausreichend verträglich sind, eingesetzt werden.

**13.** Verfahren nach Anspruch 11 oder 12, **dadurch gekennzeichnet, dass** das Masterbatch, welches das Flammschutzmittel und gegebenenfalls den Hydrolysestabilisator enthält, vorkristallisiert bzw. vorgetrocknet wird, indem es unter reduziertem Druck im Bereich von 20 bis 80 mbar, vorzugsweise von 30 bis 60 mbar, insbesondere von 40 bis 50 mbar, und unter Rühren gradiell erhitzt und gegebenenfalls bei konstanter, erhöhter Temperatur ebenfalls unter reduziertem Druck nachgetrocknet wird, wobei das Masterbatch bei Raumtemperatur zunächst in der gewünschten Abmischung zusammen mit den Polymeren der Kern- und/oder Deckschichten und ggf. anderen Rohstoffkomponenten chargenweise in einen Vakuumtrockner, der im Laufe der Trocken- bzw. Verweilzeit ein Temperaturspektrum von 10 bis 160 °C, vorzugsweise von 20 bis 150 °C, insbesondere von 30 bis 130 °C, durchläuft, gefüllt wird, wobei während der ca. 6-stündigen, vorzugsweise 5-stündigen, insbesondere 4-stündigen, Verweilzeit in dem Vakuumtrockner die Rohstoffmischung mit 10 bis 70 Upm, vorzugsweise mit 15 bis 65 Upm, insbesondere mit 20 bis 60 Upm, gerührt wird und wobei dann das so vorkristallisierte bzw. vorgetrocknete Rohstoffgemisch in einem nachgeschalteten ebenfalls evakuierten Behälter bei 90 bis 180 °C, vorzugsweise 100 bis 170 °C, insbesondere 110 bis 160 °C, für 2 bis 8 Stunden, vorzugsweise 3 bis 7 Stunden, insbesondere 4 bis 6 Stunden, nachgetrocknet wird.

**14.** Verwendung einer gefärbten Folie nach einem der Ansprüche 1 bis 10 für Möbelfolien, für Innenraumverkleidungen, für den Messebau und Messeartikel, als Display, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, als Schattenmatten und für Elektroanwendungen.

**15.** Verwendung einer gefärbten Folie nach einem der Ansprüche 1 bis 10 zum Thermoformen beliebiger Formkörper für Innen- und Außenanwendungen.

**Claims**

**1.** A colored, thermoformamble film with a thickness within the range from 10 to 500 μm comprising, as main constituent, a crystallizable thermoplastic, wherein the film comprises at least one dye soluble in the thermoplastic and/or comprises an inorganic colorant, wherein the film also comprises at least one UV absorber, and wherein the film additionally comprises at least one flame retardant.

**2.** The colored film as claimed in claim 1, wherein the crystallizable thermoplastic has been selected from the group consisting of polyethylene terephthalate, polybutylene terephthalate, polyethylene naphthalate and mixtures of these, polyethylene terephthalate (PET) being preferred.

**3.** The colored film as claimed in claim 1 or 2, wherein the film comprises, based on the weight of the layer of the crystallizable thermoplastic, an amount within the range from 0.01 to 5% by weight of the UV absorber, and wherein the film comprises, based on the weight of the layer of the crystallizable thermoplastic, an amount within the range from 0.5 to 30.0% by weight, preferably from 1.0 to 20.0% by weight, of the flame retardant, fed to the thermoplastic by way of masterbatch technology directly during film production.

**4.** The colored film as claimed in any of claims 1 to 3, wherein the film comprises, as flame retardant, organic phosphorus compounds, such as carboxyphosphinic acids, anhydrides of these or dimethyl methylphosphonate, and wherein the film also comprises an amount of from 0.01 to 1.0% by weight of a hydrolysis stabilizer.

5. The colored film as claimed in any of claims 1 to 4, wherein the film comprises, as inorganic color pigment, an inorganic black pigment or an inorganic non-black color pigment, or wherein the film comprises an organic non-black color pigment, and wherein the amount of pigment, based on the weight of the thermoplastic, is within the range from 0.2 to 40% by weight, preferably from 0.5 to 25% by weight.

6. The colored film as claimed in any of claims 1 to 4, wherein the film comprises a dye soluble in the thermoplastic, and wherein the amount of soluble dye, based on the weight of the crystallizable thermoplastic, is within the range from 0.01 to 20.0% by weight, in particular within the range from 0.05 to 10.0% by weight.

7. The colored film as claimed in any of claims 1 to 6, wherein the film comprises, as UV stabilizer, a light stabilizer selected from the group consisting of 2-hydroxybenzophenones, 2-hydroxybenzotriazoles, organonickel compounds, salicylic esters, cinnamic ester derivatives, resorcinol monobenzoates, oxanilides, hydroxybenzoic esters, sterically hindered amines, benzoxazinones, aromatic diimides or triazines, preferably the 2-hydroxybenzotriazoles, the benzoxazinones and the triazines.

8. The colored film as claimed in any of claims 1 to 7, wherein the film comprises, as main constituent, a crystallizable polyethylene terephthalate with a diethylene glycol content of ≥ 1.0% by weight, preferably ≥ 1.2% by weight, in particular ≥ 1.3% by weight, and/or with a polyethylene glycol content (PEG content) of ≥ 1.0% by weight, preferably ≥ 1.2% by weight, in particular ≥ 1.3% by weight, and/or with an isophthalic acid (IPA) content within the range from 1.5 to 10% by weight, and comprises an amount within the range from 1 to 20% by weight of an organic PET-soluble phosphorus compound (dimethyl methylphosphonate) as flame retardant, an amount within the range from 0.01 to 5.0% by weight of a PET-soluble UV absorber selected from the group consisting of 2-hydroxybenzotriazoles and triazines, and an amount within the range from 0.05 to 25% by weight of soluble dye and/or of inorganic colorant.

9. The colored film as claimed in any of claims 1 to 8, wherein the surface gloss of the film, measured to DIN 67530 (measurement angle 20°), is above 15, preferably above 20, the light transmittance L of opaquely colored films, measured to ASTM D1003, is below 70%, preferably below 60%, and the light transmittance of transparently colored films is ≥ 50%, preferably ≥ 60%, in particular ≥ 70%, measured to ASTM D1003.

10. The colored film as claimed in any of claims 1 to 9, wherein the film has one or more layers and in the embodiment having more than one layer has been built up from at least one core layer and from at least one outer layer, a three-layer A-B-A or A-B-C structure being particularly preferred.

11. A process for producing a colored, flame-retardant, thermoformable, UV-resistant film as claimed in any of claims 1 to 10 by extrusion on an extrusion line, where the molten thermoplastic material is extruded through a slot die and, as a substantially amorphous prefilm, quenched on a chill roll, this prefilm is then reheated and stretched longitudinally and transversely, or transversely and longitudinally, or longitudinally, transversely and again longitudinally and/or transversely, the stretching temperatures being set to $T_G$ + 10 K to $T_G$ + 60 K, and where the longitudinal stretching ratio is from 2 to 6, in particular from 3 to 4.5, the transverse stretching ratio is from 2 to 5, in particular from 3 to 4.5, and the ratio for any second longitudinal or transverse stretching carried out is from 1.1 to 5, and where the film is then heat-set at oven temperatures of from 180 to 260°C, in particular from 220 to 250°C, which comprises adding the flame retardant to the thermoplastic by way of masterbatch technology, where the flame retardant has been fully dispersed in a carrier material and where the carrier material used comprises the thermoplastic itself or other polymers compatible with the thermoplastic.

12. The process as claimed in claim 11, wherein the addition of the color additive and of the UV stabilizer to the thermoplastic is undertaken by way of masterbatch technology, where the UV stabilizer and the color additive are fully dispersed in a solid carrier material and where the carrier materials used comprise the thermoplastic itself or other polymers sufficiently compatible with the thermoplastic.

13. The process as claimed in claim 11 or 12, wherein the masterbatch which comprises the flame retardant and, if desired, the hydrolysis stabilizer is precrystallized and/or predried by being gradually heated, with stirring and at a subatmospheric pressure within the range from 20 to 80 mbar, preferably from 30 to 60 mbar, in particular from 40 to 50 mbar, and, if desired, is postdried at a constant elevated temperature, again at subatmospheric pressure, where the masterbatch, at room temperature and in the desired blend together with the polymers of the core and/or outer layers and, if desired, with other raw material components, is first charged in batches to a vacuum dryer which during the course of the drying or residence time passes through a temperature profile between 10 and

160°C, preferably between 20 and 150°C, in particular between 30 and 130°C, where during the residence time of about 6 hours, preferably about 5 hours, in particular about 4 hours, in the vacuum dryer the raw material mixture is stirred at from 10 to 70 rpm, preferably from 15 to 65 rpm, in particular from 20 to 60 rpm, and where the resultant precrystallized and/or predried raw material mixture is postdried in a downstream vessel, likewise evacuated, at from 90 to 180°C, preferably from 100 to 170°C, in particular from 110 to 160°C, for from 2 to 8 hours, preferably from 3 to 7 hours, in particular from 4 to 6 hours.

**14.** The use of a colored film as claimed in any of claims 1 to 10 for furniture films, for interior decoration, for constructing exhibition stands, for exhibition requisites, as a display, for placards, for the protective glazing of machines or of vehicles, in the lighting sector, in the fitting out of shops or of stores, as a promotional requisite or laminating medium, for greenhouses, roofing systems, exterior cladding, protective coverings, applications in the construction sector, or for illuminated advertising profiles, or as blinds or for electrical applications.

**15.** The use of a colored film as claimed in any of claims 1 to 10 for thermoforming any desired molding for indoor or outdoor applications.

## Revendications

**1.** Feuille thermoformable colorée, ayant une épaisseur dans la plage de 10 à 500 µm, comprenant à titre de composant principal un thermoplastique cristallisable, **caractérisée en ce que** la feuille comprend au moins un colorant soluble dans le thermoplastique et/ou un colorant inorganique, **en ce qu'**elle comprend en plus au moins un absorbeur d'UV et **en ce qu'**elle comprend en outre au moins un agent ignifuge.

**2.** Feuille colorée selon la revendication 1, **caractérisée en ce que** le thermoplastique cristallisable est choisi dans le groupe comprenant le polyéthylène téréphtalate, le polybutylène téréphtalate, le polyéthylène naphtalate ou des mélanges de ceux-ci, le polyéthylène téréphtalate (PET) étant préféré.

**3.** Feuille colorée selon la revendication 1 ou 2, **caractérisée en ce qu'**elle comprend l'absorbeur d'UV en une quantité entre 0,01 et 5 % en poids, par rapport au poids de la couche de thermoplastique cristallisable, et **en ce qu'**elle comprend l'agent ignifuge, qui est ajouté directement lors de la fabrication de la feuille selon la technique du mélange maître, en une quantité allant de 0,5 à 30,0 % en poids, de préférence de 1,0 à 20,0 % en poids, par rapport au poids de la couche de thermoplastique cristallisable.

**4.** Feuille colorée selon l'une des revendications 1 à 3, **caractérisée en ce qu'**elle comprend, à titre d'ignifuge, des composés phosphoriques organiques comme les acides carboxyphosphiniques, leurs anhydrides ou du diméhylméthyl-phosphonate et **en ce qu'**elle comprend en plus un stabilisateur d'hydrolyse en une quantité allant de 0,01 à 1,0 % en poids.

**5.** Feuille colorée selon l'une des revendications 1 à 4, **caractérisée en ce qu'**elle comprend à titre de pigment colorant inorganique un pigment noir inorganique ou un pigment coloré inorganique ou **en ce qu'**elle comprend un pigment coloré organique et **en ce que** la quantité de pigment se situe dans la plage de 0,2 à 40 % en poids, de préférence de 0,5 à 25 % en poids par rapport au poids du thermoplastique.

**6.** Feuille colorée selon l'une des revendications 1 à 4, **caractérisée en ce qu'**elle comprend un colorant soluble dans le thermoplastique et **en ce que** la quantité de colorant soluble se situe dans la plage de 0,01 à 20,0 % en poids, en particulier dans la plage de 0,05 à 10,0 % en poids, par rapport au poids du thermoplastique cristallisable.

**7.** Feuille colorée selon l'une des revendications 1 à 6, **caractérisée en ce qu'**elle comprend à titre de stabilisateur d'UV un agent photoprotecteur choisi dans le groupe comprenant les 2-hydroxybenzophénones, 2-hydroxybenzotriazoles, les composés organiques de nickel, les esters d'acide salicylique, les dérivés d'ester d'acide cinnamique, les monobenzoates de résorcine, les anilides d'acide oxalique, les esters d'acide hydroxybenzoïque, les amines encombrées stériquement, les benzoxazinones, les diimides aromatiques et les triazines, les 2-hydroxybenzotriazoles, benzoxazinones et triazines étant préférés.

**8.** Feuille colorée selon l'une des revendications 1 à 7, **caractérisée en ce qu'**elle comprend à titre de composant principal un polyéthylène téréphtalate cristallisable, avec une teneur en diéthylène glycol ≥ 1,0 % en poids, de préférence ≥ 1,2 % en poids, plus préférentiellement ≥ 1,3 % en poids et/ou une teneur en polyéthylène glycol

(teneur en PEG) de ≥ 1,0 % en poids, de préférence ≥ 1,2 % en poids, plus préférentiellement ≥ 1,3 % en poids et/ou une teneur en acide isophtalique (IPA) dans la plage de 1,5 à 10 % en poids, une quantité allant dans la plage de 1 à 20 % en poids d'un composé phosphorique, organique, soluble dans le PET, (diméthyl-méthylphosphonate) à titre d'ignifuge, une quantité dans la plage de 0,01 à 5,0 % en poids d'un absorbeur d'UV soluble dans le PET choisi dans le groupe des 2-hydroxybenzotriazoles ou des triazines et une quantité dans la plage de 0,05 à 25 % en poids d'un colorant soluble et/ou d'un colorant inorganique.

**9.** Feuille colorée selon l'une des revendications 1 à 8, **caractérisée en ce qu'**elle présente une brillance de surface, mesurée d'après la norme DIN 67530 (angle de mesure 20°), supérieure à 15, de préférence supérieure à 20, une transmission de la lumière L des feuilles colorées opaques, mesurée d'après la norme ASTM D 1003, inférieure à 70 %, de préférence inférieure à 60 %, et une transmission de la lumière des feuilles colorées transparentes de ≥ 50 %, de préférence de ≥ 60 %, en particulier ≥ 70 %, mesurée d'après la norme ASTM D 1003.

**10.** Feuille colorée selon l'une des revendications 1 à 9, **caractérisée en ce qu'**elle est monocouche ou multicouche, où elle est composée, dans le mode de réalisation multicouche, d'au moins une couche centrale et d'au moins une couche de recouvrement et où une structure tricouche A-B-C ou A-B-A est particulièrement préférée.

**11.** Procédé pour la fabrication d'une feuille colorée, thermoformable, résistant à l'inflammation et stable aux UV, selon l'une des revendications 1 à 10, par extrusion dans une voie d'extrusion, où le matériau thermoplastique fondu est extrudé à travers une filière en forme de fente et refroidi rapidement sur un rouleau de refroidissement sous forme de préfeuille largement amorphe, cette préfeuille est ensuite de nouveau chauffée et étirée dans la direction longitudinale et transversale ou bien dans la direction transversale et longitudinale ou bien dans la direction longitudinale, transversale et encore longitudinale et/ou transversale, les températures d'étirement étant ajustées de $T_g$ + 10 K à $T_g$ + 60 K et le rapport d'étirement de l'étirement longitudinal se situant vers 2 à 6, en particulier vers 3 à 4,5, celui de l'étirement transversal se situant vers 2 à 5, en particulier vers 3 à 4,5, et celui de l'étirement longitudinal ou transversal éventuellement réalisé autour de 1,1 à 5, et où la thermofixation de la feuille se fait alors à des températures de four de 180 à 260°C, en particulier de 220 à 250°C, **caractérisé en ce que** l'ignifuge est ajouté au thermoplastique par le biais de la technique du mélange maître, l'ignifuge étant entièrement dispersé dans un matériau support et le thermoplastique lui-même ou d'autres polymères, compatibles avec le thermoplastique, étant utilisés comme matériau support.

**12.** Procédé selon la revendication 11, **caractérisé en ce que** l'ajout de l'additif colorant ou du stabilisateur d'UV au thermoplastique est effectué selon la technique du mélange maître, le stabilisateur d'UV et l'additif colorant étant entièrement dispersés dans un matériau support solide, le thermoplastique lui-même ou d'autres polymères, suffisamment compatibles avec le thermoplastique, étant utilisés comme matériaux supports.

**13.** Procédé selon la revendication 11 ou 12, **caractérisé en ce que** le mélange maître qui comprend l'ignifuge, et le cas échéant le stabilisateur d'hydrolyse, est précristallisé ou préséché, en le chauffant graduellement sous pression réduite dans une plage de 20 à 80 mbars, de préférence de 30 à 60 mbars, en particulier de 40 à 50 mbars et sous agitation et, le cas échéant, en le séchant ensuite à température élevée constante, le cas échéant, sous pression réduite, le mélange maître étant d'abord chargé, lot par lot, à température ambiante en une proportion de mélange voulue avec les polymères des couches centrales et/ou de recouvrement et éventuellement d'autres composants de matières premières dans un séchoir sous vide qui passe, au cours du temps de séchage ou de résidence, par un spectre de températures allant de 10 à 160°C, de préférence 20 à 150°C, en particulier 30 à 130°C, où, pendant les quelques 6 heures, de préférence 5 heures, en particulier 4 heures de temps de résidence dans le séchoir sous vide, le mélange de matières premières est agité à une vitesse de 10 à 70 t/min, de préférence 15 à 65 t/min, en particulier 20 à 60 t/min, et où le mélange de matières premières ainsi précristallisé ou préséché est ultérieurement séché dans une cuve placée en aval, éventuellement évacuée, à une température de 90 à 180°C, de préférence 100 à 170°C, en particulier 110 à 160°C, pour une durée de 2 à 8 heures, de préférence 3 à 7 heures, en particulier 4 à 6 heures.

**14.** Utilisation d'une feuille colorée selon l'une des revendications 1 à 10 pour des films de mobilier, pour des habillages d'habitacle intérieur, pour des installations de foire et des articles de foires, comme affichage, pour des pancartes, pour des verres protecteurs de machines et pare-brise de véhicules, dans le domaine de l'éclairage, dans l'aménagement des boutiques et des étals, comme articles publicitaires, produits de laminage, pour des serres, des toitures, des habillages extérieurs, des couvertures, des applications dans le secteur du bâtiment et comme profilés publicitaires lumineux, comme bâches de protection agricole ou dans des applications électriques.

**15.** Utilisation d'une feuille colorée selon l'une des revendications 1 à 10 pour le thermoformage de corps moulés quelconques destinés à des applications internes et externes.